# EUROPEAN PATENT SPECIFICATION

(11) **EP 4 495 891 B1**
(45) Date of publication and mention of the grant of the patent: **19.08.2026**
(21) Application number: 24183640.2
(22) Date of filing: 21.06.2024
(51) Int. Cl.: G06V 10/44, G06V 10/82

(54) **METHOD AND SYSTEM FOR MANUFACTURER AND TYPE IDENTIFICATION OF A MEDICAL IMPLANT**
VERFAHREN UND SYSTEM ZUR HERSTELLER- UND TYPERKENNUNG EINES MEDIZINISCHEN IMPLANTATS
PROCÉDÉ ET SYSTÈME DE FABRICATION ET D'IDENTIFICATION DE TYPE D'IMPLANT MÉDICAL

(30) Priority: 21.07.2023 IN 202321049274
(43) Date of publication of application: 22.01.2025
(73) Proprietor: Tata Consultancy Services Limited, Maharashtra (IN)
(72) Inventor: KANAKATTE GURUMURTHY, Aparna, 560009 Bangalore, Karnataka (IN); GHOSE, Avik, 700160 Kolkata, West Bengal (IN); MUKHERJEE, Rupsha, 700160 Kolkata, West Bengal (IN); PODUVAL, Murali, 400606 Thane West, Maharashtra (IN); BHATIA, Divya Manoharlal, 560009 Bangalore, Karnataka (IN); GUBBI LAKSHMINARASIMHA, Jayavardhana Rama, 560066 Bangalore, Karnataka (IN)
(74) Representative: Goddar, Heinz J.

(56) References cited:
- US-A1- 2020 074 631
- YAN SHI ET AL: "DeepTKAClassifier: Brand Classification of Total Knee Arthroplasty Implants Using Explainable Deep Convolutional Neural Networks", 31 December 2020, SPRINGER, PAGE(S) 154 - 165, XP047591411
- YI PAUL H ET AL: "Automated detection and classification of shoulder arthroplasty models using deep learning", SKELETAL RADIOLOGY, vol. 49, no. 10, 15 May 2020 (2020-05-15), pages 1623 - 1632, XP037318508, ISSN: 0364-2348, DOI: 10.1007/S00256-020-03463-3
- PATEL RAVI ET AL: "Automated Identification of Orthopedic Implants on Radiographs Using Deep Learning", RADIOLOGY: ARTIFICIAL INTELLIGENCE, vol. 3, no. 4, 1 July 2021 (2021-07-01), US, pages e200183, XP093228783, ISSN: 2638-6100, DOI: 10.1148/ryai.2021200183

## Description

### CROSS-REFERENCE TO RELATED APPLICATIONS AND PRIORITY

The present application claims priority to Indian application no. 202321049274, filed on July 21, 2023.

### TECHNICAL FIELD

The disclosure herein generally relates to image processing, and, more particularly, to a method and system for manufacturer and type identification of a medical implant.

### BACKGROUND

Medical implants (or otherwise referred to as 'implants') are devices or tissues that are placed inside or on surface of body. Some may replace missing body parts, while others may deliver medication, monitor body functions, or provide support to organs and tissues. Implanted prosthetics maybe subject to wear and tear. Due to critical functionalities they serve, it is important to keep a check on health of the implant. Different prosthesis models require different procedures and sometimes different equipment for repair and removal. Patients and surgeons may not know the model or manufacturer of the original prosthesis often if the original surgery was performed many years before the follow-up surgery, or if the surgery was performed internationally or due to ambiguity in medical records. Currently, the task of identifying a prosthesis model in such cases involves rigorous examinations and visual inspection comparison of X-ray images which is difficult for both radiologists and orthopedic surgeons. This can be a meticulous task that is tedious, dependent on the surgeon's experience, time-consuming and an erroneous recognition can have certain consequences, thus, indicating an unmet need for a tool that will aid the experts in identifying unknown prostheses quickly and accurately. Yan Shi et.al states that "Total knee arthroplasty (TKA) is one of the most successful surgical procedures worldwide. It improves quality of life, mobility, and functionality for the vast majority of patients. However, a TKA surgery may fail over time for several reasons, thus it requires a revision arthroplasty surgery. Identifying TKA implants is a critical consideration in preoperative planning of revision surgery. This study aims to develop, train, and validate deep convolutional neural network models to precisely classify four widely-used TKA implants based on only plain knee radiographs'.

YAN SHI ET AL: "DeepTKAClassifier: Brand Classification of Total Knee Arthroplasty Implants Using Explainable Deep Convolutional Neural Networks", 31 December 2020 (2020-12-31), SPRINGER, PAGE(S) 154 - 165, disclose a system for brand classification of implants.

### SUMMARY

The invention is defined by the set of appended claims. Embodiments of the present disclosure present technological improvements as solutions to one or more of the above-mentioned technical problems recognized by the inventors in conventional systems. The invention is set out in appended set of claims.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary system for manufacturer and type identification of a medical implant in a subject, according to some embodiments of the present disclosure.
FIG. 2 is a flow diagram depicting steps involved in the process of identifying manufacturer and type of a medical implant, using the system of FIG. 1, according to some embodiments of the present disclosure.
FIG. 3 illustrates a block diagram of a 3-block classifier used by the system of FIG. 1, for feature extraction, in accordance with some embodiments of the present disclosure.
FIG. 4 illustrates a block diagram of a convolution dense block of the 3-block classifier, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Different prosthesis models require different procedures and sometimes different equipment for repair and removal. Patients and surgeons may not know the model or manufacturer of the original prosthesis often if the original surgery was performed many years before the follow-up surgery, or if the surgery was performed internationally or due to ambiguity in medical records. Currently, the task of identifying a prosthesis model in such cases involves rigorous examinations and visual inspection comparison of X-ray images which is difficult for both radiologists and orthopedic surgeons. This can be a meticulous task that is tedious, dependent on the surgeon's experience, time-consuming and an erroneous recognition can have certain consequences, thus, indicating an unmet need for a tool that will aid the experts in identifying unknown prostheses quickly and accurately.

In order to address these challenges in the art, embodiments disclosed herein provide a method and system for manufacturer and type identification of a medical implant. The method includes collecting an X-ray image of a subject as input. Further, a plurality of features of at least one implant in the X-ray image is extracted, using a 3-block classifier executed by one or more hardware processors, wherein the 3-block classifier extracts the plurality of features using a) an encoder-decoder block, b) a convolution dense block, and c) a classification block, of the 3-block classifier. Further, the extracted plurality of features is compared with a set of manufacturer specifications. Further, type and manufacturer of the at least one implant are identified based on a match found for the extracted plurality of features with the manufacturer specifications.

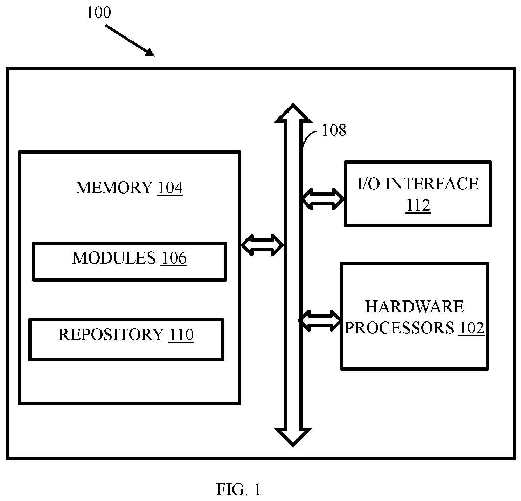

Referring now to the drawings, and more particularly to FIG. 1 through FIG. 4, where similar reference characters denote corresponding features consistently throughout the figures, there are shown preferred embodiments and these embodiments are described in the context of the following exemplary system and/or method.

FIG. 1 illustrates an exemplary system for manufacturer and type identification of a medical implant in a subject, according to some embodiments of the present disclosure. The system 100 includes or is otherwise in communication with hardware processors 102, at least one memory such as a memory 104, an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106.

The plurality of modules 106 include programs or coded instructions that supplement applications or functions performed by the system 100 for executing different steps involved in the process of implant manufacturer and type identification, being performed by the system 100. The plurality of modules 106, amongst other things, can include routines, programs, objects, components, and data structures, which performs particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for the implant manufacturer and type identification.

The data repository (or repository) 110 may include a plurality of abstracted piece of code for refinement and data that is processed, received, or generated as a result of the execution of the plurality of modules in the module(s) 106.

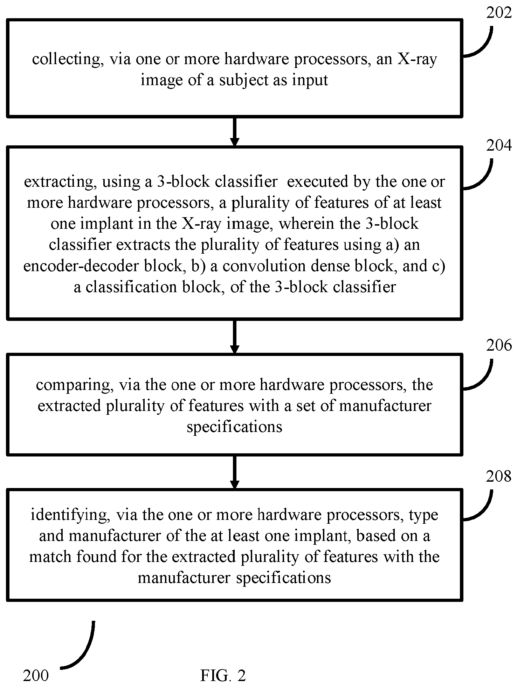

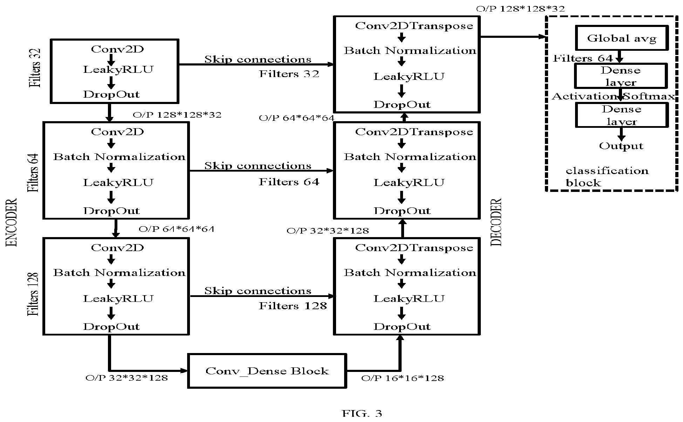

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to the steps in flow diagrams in FIG. 2 and the 3-block classifier diagram in FIG. 3.

FIG. 2 is a flow diagram depicting steps involved in the process of identifying manufacturer and type of a medical implant, using the system of FIG. 1, according to some embodiments of the present disclosure.

In an embodiment, the system 100 comprises one or more data storage devices or the memory 104 operatively coupled to the processor(s) 102 and is configured to store instructions for execution of steps of the method 200 by the processor(s) or one or more hardware processors 102. The steps of the method 200 of the present disclosure will now be explained with reference to the components or blocks of the system 100 as depicted in FIG. 1 and the steps of flow diagram as depicted in FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

At step 202 of method 200 in FIG. 2, the system 100 collects, via the one or more hardware processors 102, an X-ray image of a subject as input. The X-ray image may contain one or more implants. In an embodiment, the X-ray image maybe from an X-ray imaging system not connected to the system 100, and in this scenario, the X-ray image maybe fed/uploaded to the system 100 via one or more suitable interfaces. In another embodiment, the system 100 maybe directly interfaced with the X-ray imaging system and may receive the X-ray image directly from the imaging system.

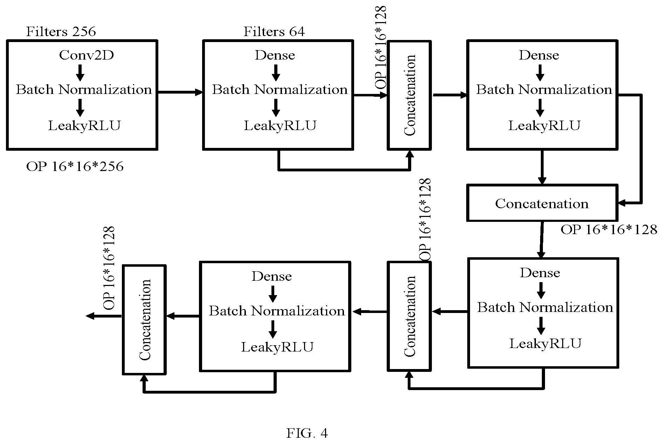

Further, at step 204 of the method 200, a plurality of features of at least one implant in the X-ray image is extracted, using a 3-block classifier (alternately referred to as 'classifier') executed by the one or more hardware processors, wherein the 3-block classifier extracts the plurality of features using a) an encoder-decoder block, b) a convolution dense block, and c) a classification block, of the 3-block classifier. Architecture of the 3-block classifier is depicted in FIG. 3. Further, the extracted plurality of features are compared via the one or more hardware processors, with a set of manufacturer specifications. Further, type and manufacturer of the at least one implant are identified, via the one or more hardware processors, based on a match found for the extracted plurality of features with the manufacturer specifications. An encoder section of the encoder-decoder block comprises a plurality of convolution blocks arranged in a sequence, wherein a first convolution block in the plurality of convolution blocks comprises of a 2D convolution layer, a leakyRelu layer, and a Dropout layer, and each subsequent convolution block among the plurality of convolution blocks comprises the 2D convolution layer, the leakyRelu layer, the Dropout layer, and a batch normalization layer. In an embodiment, a Dropout of 0.4 is used. The batch normalization is used in the encoder section to stabilize an activation distribution, and mean and standard deviation migrate as the 3-block classifier learns. In an embodiment, input data to the classifier is normalized in 0-1 range as part of preprocessing, easing process of computing mean and variance of whole of a training sample used, rather than learning per batch, hence reducing redundancy and saving cost. A decoder section of the encoder-decoder block comprises a plurality of 2D transposed convolution up-sampling blocks arranged in a sequence, wherein each of the plurality of 2D transposed convolution up-sampling blocks comprises of a convolutional 2D transpose layer, a batch normalization layer, a leakyRelu layer, and a Dropout layer. The 2D transposed convolution up-sampling layers take features from the convolution dense block, with rest of the parameters similar to the encoder. Each subsequent block in the encoder section is filtered with 32-64-128 filters respectively with a stride of 2 and a kernel of 3 × 3. The kernel is initialized as 'He Normal'. A L2 kernel regularizer maybe used to reduce covariate shifts and instability in distributions. Skip connections are used between the encoder and decoder to preserve specific and crucial information lost during down-sampling. The convolution dense block comprises a convolution block and a plurality of dense blocks. The convolution block comprises of 256 filters, a leakyRelu layer, and a batch normalization layer, and each of the plurality of dense blocks comprises of a dense layer, the leakyRelu layer, and the batch normalization layer. The convolution block extracts one or more finer features of the at least one implant using the 256 filters and one or more feature maps, and features of each of the plurality of dense blocks is combined with data from an activation layer using a concatenation block. Each of the dense layers has 64 filters, followed by batch normalization and Leaky Relu activation layers. The structure of the convolution dense block is depicted in FIG. 4. It was observed from feature maps using gradient weighted class activation mapping that edges, screws present, domes, pointed bottoms, of the at least one implant are key features that play a significant role in identifying manufacturer type. The 3-block classifier uses a sobel filter is used for capturing the plurality of edge-based features of the at least one implant, including the edges, screws present, domes, and the pointed bottoms, of the at least one implant. Output of the decoder section is fed as input to the classification block. A Global Average Pooling layer of the classification block collects the data from the decoder section and generates one feature for each corresponding category of the classification task, thus reducing memory requirement, enforces correspondence, and reduces overfitting. The Global Average Pooling layer is followed by a Dense layer with 64 filters, and Relu activation with a Random Normal kernel. A final layer in the sequence is a dense layer with a SoftMax function for 4-class classification and classifies the extracted plurality of features to a set of pre-defined feature classes. In another embodiment the 3-block classifier uses a supervised contrastive loss function to eliminate a class imbalance problem while identifying the type and manufacturer of the at least one implant, wherein while calculating loss of one class type the supervised contrastive loss function considers embeddings of one or more other classes. In this approach, clusters of points belonging to same class are pulled together in embedding space and clusters of samples from different classes are pulled apart. Loss value calculated using the supervised contrastive loss function is expressed as: $L = max \left[d\left(a, p\right)-d\left(a, n\right)+m,0\right]$ Where, *a* is an anchor label or label under consideration, *p* is positive sample with the same label as the anchor point, *n* is negative sample with a different label from *a, m* is margin, and *d* is distance measured between samples, which maybe a Euclidean distance. Factoring in information from all the other implant classes using this loss helps in better convergence and generalization. Output of the 3-block classifier is the features specific to the at least one implant, that have been extracted from the X-ray image.

Further, at step 206 of the method 200, the system 100 compares the extracted plurality of features with a set of manufacturer specifications. The manufacturer specifications capture characteristics of different types of the implants from each of a plurality of manufacturers. The characteristics maybe in terms of features such as but not limited to edges, screws present, domes, and pointed bottoms. In an embodiment, each type of implant from each manufacturer may have one or more unique characteristics, which helps differentiate between implants from different manufacturers and helps identify type of implant. By comparing the extracted plurality of features with the set of manufacturer specifications, the system 100 checks for matches for the extracted plurality of features with data in the set of manufacturer specifications, and based on a match found, identifies type and manufacturer of the at least one implant, at step 208 of the method 200.

The identified data with respect to the manufacturer and type of the at least one implant is then provided as output of the system 100, to at least one user of the system 100, via one or more output means. For example, manufacturer and type information maybe displayed using a display interface, and/or maybe provided in the form of a report. This information maybe then used by the user, who maybe a doctor or any other qualified personnel, to make informed decisions with respect to implant purchase for replacement of existing implant.

### Experimental Data:

### A. Preprocessing and Implementation Details

For the experiments, the input image size was normalized to 256 × 256 as per the network requirement. Images which were less than this size were zero-padded and boundaries cropped if the size was more. The pixel values were normalized between [0,1]. The network training was done for 500 epochs having a batch size of 32 using Adam optimizer. Adaptive learning rates like time-based learning rate decay schedulers and reduction of learning rate when a metric has stopped improving were employed during training to get better convergence and avoid overfitting, and the method 200 was implemented using Tensorflow and OpenCV.

### B. Performance Metrics

Performance of the 3-block classifier of the system 100 was compared using the following metrics. Accuracy is the ratio of correct predictions to all predictions as given in Eq. 2. Precision is the ratio of true positives to predicted positives as defined in Eq. 3. Recall is the ratio of true positives to actual positives as given in Eq. 4. F1-score is the harmonic mean between precision and recall as defined in Eq. 5. $Accuracy = \frac{1}{K} {\sum }_{k = 1}^{K} \frac{{TP}_{k} + {TN}_{k}}{{TP}_{k} + {TN}_{k} + {FP}_{k} + {FN}_{k}}$ $Precision = \frac{1}{K} {\sum }_{k = 1}^{K} \frac{{TP}_{k}}{{TP}_{k} + {TN}_{k}}$ $Recall = \frac{1}{K} {\sum }_{k = 1}^{K} \frac{{TP}_{k}}{{TP}_{k} + {TN}_{k}}$ $F 1 - score = 2 ∗ \frac{Precision ∗ Recall}{Precision + Recall}$
where K represents the total number of classes, which was 4 during the experiment. *TPₖ* is the number of true positives of class k, which represents the correctly predicted image from class k. *FPₖ* is the number of false positives of class k representing the incorrect prediction of another class into class k. *TNₖ* represents the number of true negatives of class k, and is the result in which the other class (except for class k) is correctly predicted by the model. *FNₖ* is the number of false negatives of class k, which occurs when class k is incorrectly predicted into another class using the model.

Performance of the method 200 was compared with other methods reported in literature on the same dataset in table I. The method 200 was found to be providing a classification accuracy of 92%. It could be seen that the non deep learning based methods like Random forest, logistic regression, gradient boosting and KNN did not perform well on this dataset providing an accuracy of around 56%, 53%, 55%, and 52% respectively with less precision, recall, and F1-scores. The classification accuracy improved significantly by using deep learning based methods like VGG providing 74%, ResNet around 75% and DenseNet around 79.6%. NASNet provided around 80%, X-Net [7] around 82%, and DRE-Net [6] around 86%. It has to be noted that even precision, recall, and F1-scores improved with deep learning based methods. The method 200 performed better than other reported methods providing an accuracy of 92%. It can be seen that the method 200 has higher precision of 0.92, a high recall of 0.87 and high F1-score of 0.90 than the ones reported in the table thus indicating the robustness.

**TABLE I: Comparison of performance measure with other reported methods on the same dataset. Note '*' denotes non deep learning based methods.**

| Methods | Accuracy | Precision | Recall | F1-score |
|---|---|---|---|---|
| Random Forest | 56 | 0.62 | 0.36 | 0.51 |
| Logistic Regression | 53 | 0.44 | 0.31 | 0.41 |
| Gradient Boosting | 55 | 0.58 | 0.34 | 0.48 |
| KNN | 52 | 0.49 | 0.31 | 0.43 |
| VGG-16 | 74.0 | 0.72 | 0.68 | 0.69 |
| VGG-19 | 76.2 | 0.75 | 0.69 | 0.70 |
| ResNet-50 | 75.4 | 0.75 | 0.70 | 0.71 |
| ResNet-152 | 75.6 | 0.73 | 0.69 | 0.70 |
| NASNet | 80.4 | 0.80 | 0.75 | 0.76 |
| DenseNet-201 | 79.6 | 0.79 | 0.74 | 0.74 |
| DRE-Net | 85.9 | 0.85 | 0.84 | 0.85 |
| X-Net | 82 | 0.81 | 0.77 | 0.79 |
| Method 200 | 92 | 0.92 | 0.87 | 0.90 |

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of manufacturer and type identification of medical implants. The embodiment, thus provides a 3-class classifier for extraction of information on finer features of the medical implant, from an X-ray image being processed. Moreover, the embodiments herein further provide a mechanism of comparing the extracted plurality of features of the implant with manufacturer specifications, to identify manufacturer and type of the implant.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

## Claims

1. A processor implemented method (200), comprising:
collecting (202), via one or more hardware processors, an X-ray image of a subject as input;
extracting (204), using a 3-block classifier executed by the one or more hardware processors, a plurality of features of at least one implant in the X-ray image, wherein the 3-block classifier extracts the plurality of features using a) an encoder-decoder block, b) a convolution dense block, and c) a classification block, wherein an encoder section of the encoder-decoder block comprises a plurality of convolution blocks arranged in a sequence, and wherein a first convolution block in the plurality of convolution blocks comprises of a 2D convolution layer, a leakyRelu layer, and a Dropout layer, and each subsequent convolution block among the plurality of convolution blocks comprises the 2D convolution layer, the leakyRelu layer, the Dropout layer, and a batch normalization layer,
wherein a decoder section of the encoder-decoder block comprises a plurality of 2D transposed convolution up-sampling blocks arranged in a sequence, and wherein each of the plurality of 2D transposed convolution up-sampling blocks comprises of a convolutional 2D transpose layer, a batch normalization layer, a leakyRelu layer, and a Dropout layer,
wherein the batch normalization is used in the encoder section to stabilize an activation distribution,
wherein the convolution dense block comprises a convolution block and a plurality of dense blocks, wherein the convolution block comprises 256 filters, a leakyRelu layer, and a batch normalization layer, and each of the plurality of dense blocks comprises a dense layer, the leakyRelu layer, and the batch normalization layer, and wherein the convolution block extracts one or more finer features of the at least one implant using the 256 filters and one or more feature maps, and features of each of the plurality of dense blocks is combined with data from an activation layer using a concatenation block,
wherein the 3-block classifier uses a supervised contrastive loss function to eliminate a class imbalance problem while identifying the type and manufacturer of the at least one implant, and wherein while calculating loss of one class type the supervised contrastive loss function considers embeddings of one or more other classes,
wherein the loss is calculated by: $L = max \left[d\left(a, p\right)-d\left(a, n\right)+m,0\right] ,$
Wherein *a* is an anchor label or label under consideration, *p* is positive sample with the same label as the anchor point, *n* is negative sample with a different label from *a*, *m* is margin, and *d* is distance measured between samples,
wherein the classification block comprises a Global Average Pooling layer collecting the data from the decoder section and generates one feature for each corresponding category of the classification task, and reducing memory requirement, enforces correspondence, and reduces overfitting, wherein the Global Average Pooling layer is followed by a Dense layer with 64 filters, and Relu activation with a Random Normal kernel and a final layer in the sequence is a dense layer with a SoftMax function for 4-class classification and classifies the extracted plurality of features to a set of pre-defined feature classes;
comparing (206), via the one or more hardware processors, the extracted plurality of features with a set of manufacturer specifications, wherein the manufacturer specifications capture characteristics of different types of the implants from each of a plurality of manufacturers, wherein each type of implant from each manufacturer comprises one or more unique characteristics helps differentiating between implants from different manufacturers and to identify type of implant;
identifying (208), via the one or more hardware processors, type and manufacturer of the at least one implant, based on a match found for the extracted plurality of features with the manufacturer specifications.

2. The processor implemented method as claimed in claim 1, wherein a sobel filter is used for capturing a plurality of edge-based features of the at least one implant, wherein the plurality of edge-based features comprises one or more of edges of the at least one implant, one or more screws present in the at least one implant, one or more domes of the at least one implant, and pointed bottom shape of implant.

3. A system (100), comprising:
one or more hardware processors (102);
a communication interface (112); and
a memory (104) storing a plurality of instructions, wherein the plurality of instructions cause the one or more hardware processors to:
collect an X-ray image of a subject as input;
extract, via a 3-block classifier executed by the one or more hardware processors, a plurality of features of at least one implant in the X-ray image, wherein the 3-block classifier extracts the plurality of features using a) an encoder-decoder block, b) a convolution dense block, and c) a classification block, wherein an encoder section of the encoder-decoder block comprises a plurality of convolution blocks arranged in a sequence, and wherein a first convolution block in the plurality of convolution blocks comprises of a 2D convolution layer, a leakyRelu layer, and a Dropout layer, and each subsequent convolution block among the plurality of convolution blocks comprises the 2D convolution layer, the leakyRelu layer, the Dropout layer, and a batch normalization layer,
wherein a decoder section of the encoder-decoder block comprises a plurality of 2D transposed convolution up-sampling blocks arranged in a sequence, and wherein each of the plurality of 2D transposed convolution up-sampling blocks comprises of a convolutional 2D transpose layer, a batch normalization layer, a leakyRelu layer, and a Dropout layer,
wherein the batch normalization is used in the encoder section to stabilize an activation distribution,
wherein the convolution dense block comprises a convolution block and a plurality of dense blocks, wherein the convolution block comprises 256 filters, a leakyRelu layer, and a batch normalization layer, and each of the plurality of dense blocks comprises a dense layer, the leakyRelu layer, and the batch normalization layer, and wherein the convolution block extracts one or more finer features of the at least one implant using the 256 filters and one or more feature maps, and features of each of the plurality of dense blocks is combined with data from an activation layer using a concatenation block,
wherein the 3-block classifier uses a supervised contrastive loss function to eliminate a class imbalance problem while identifying the type and manufacturer of the at least one implant, and wherein while calculating loss of one class type the supervised contrastive loss function considers embeddings of one or more other classes,
wherein the loss is calculated by: $L = max \left[d\left(a, p\right)-d\left(a, n\right)+m,0\right] ,$
Wherein *a* is an anchor label or label under consideration, *p* is positive sample with the same label as the anchor point, *n* is negative sample with a different label from *a, m* is margin, and *d* is distance measured between samples,
wherein the classification block comprises a Global Average Pooling layer collecting the data from the decoder section and generates one feature for each corresponding category of the classification task, and reducing memory requirement, enforces correspondence, and reduces overfitting, wherein the Global Average Pooling layer is followed by a Dense layer with 64 filters, and Relu activation with a Random Normal kernel and a final layer in the sequence is a dense layer with a SoftMax function for 4-class classification and classifies the extracted plurality of features to a set of pre-defined feature classes;
compare the extracted plurality of features with a set of manufacturer specifications, wherein the manufacturer specifications capture characteristics of different types of the implants from each of a plurality of manufacturers, wherein each type of implant from each manufacturer comprises one or more unique characteristics helps differentiating between implants from different manufacturers and to identify type of implant; and identify type and manufacturer of the at least one implant, based on a match found for the extracted plurality of features with the manufacturer specifications.

4. The system as claimed in claim 3, wherein a sobel filter is used for capturing a plurality of edge-based features of the at least one implant, wherein the plurality of edge-based features comprises one or more of edges of the at least one implant, one or more screws present in the at least one implant, one or more domes of the at least one implant, and pointed bottom shape of implant.

## Patentansprüche

1. Prozessorimplementiertes Verfahren (200), umfassend:
Sammeln (202), über einen oder mehrere Hardwareprozessoren, eines Röntgenbilds eines Subjekts als Eingabe;
Extrahieren (204), unter Verwendung eines 3-Block-Klassifikators, der von dem einen oder den mehreren Hardwareprozessoren ausgeführt wird, einer Mehrzahl von Merkmalen von mindestens einem Implantat in dem Röntgenbild, wobei der 3-Block-Klassifikator die Mehrzahl von Merkmalen unter Verwendung von a) einem Codierer-Decodierer-Block, b) einem faltungsdichten Block und c) einem Klassifikationsblock extrahiert, wobei ein Codiererabschnitt des Codierer-Decodierer-Blocks eine Mehrzahl von Faltungsblöcken umfasst, die in einer Sequenz angeordnet sind, und wobei ein erster Faltungsblock in der Mehrzahl von Faltungsblöcken eine 2D-Faltungsschicht, eine leakyRelu-Schicht und eine Dropout-Schicht umfasst, und jeder nachfolgende Faltungsblock unter der Mehrzahl von Faltungsblöcken die 2D-Faltungsschicht, die leakyRelu-Schicht, die Dropout-Schicht und eine Stapelnormalisierungsschicht umfasst,
wobei ein Decodiererabschnitt des Codierer-Decodierer-Blocks eine Mehrzahl von 2D-transponierten Faltungsaufwärtsabtastungsblöcken umfasst, die in einer Sequenz angeordnet sind, und wobei jeder der Mehrzahl von 2D-transponierten Faltungsaufwärtsabtastungsblöcken eine faltende 2D-Transponierungsschicht, eine Stapelnormalisierungsschicht, eine leakyRelu-Schicht und eine Dropout-Schicht umfasst,
wobei die Stapelnormalisierung in dem Codiererabschnitt verwendet wird, um eine Aktivierungsverteilung zu stabilisieren,
wobei der faltungsdichte Block einen Faltungsblock und eine Mehrzahl von dichten Blöcken umfasst, wobei der Faltungsblock 256 Filter, eine leakyRelu-Schicht und eine Stapelnormalisierungsschicht umfasst, und jeder der Mehrzahl von dichten Blöcken eine dichte Schicht, die leakyRelu-Schicht und die Stapelnormalisierungsschicht umfasst, und wobei der Faltungsblock ein oder mehrere feinere Merkmale des mindestens einen Implantats unter Verwendung der 256 Filter und einer oder mehrerer Merkmalskarten extrahiert, und Merkmale von jedem der Mehrzahl von dichten Blöcken mit Daten von einer Aktivierungsschicht unter Verwendung eines Verkettungsblocks kombiniert werden,
wobei der 3-Block-Klassifikator eine überwachte Kontrastverlustfunktion verwendet, um ein Klassenungleichgewichtsproblem zu eliminieren, während der Typ und Hersteller des mindestens einen Implantats identifiziert werden, und wobei während der Berechnung des Verlusts eines Klassentyps die überwachte Kontrastverlustfunktion Einbettungen einer oder mehrerer anderer Klassen berücksichtigt,
wobei der Verlust berechnet wird durch: $L = max \left[d\left(a, p\right)-d\left(a, n\right)+m,0\right] ,$
wobei *a* ein Ankeretikett oder ein in Betracht gezogenes Etikett ist, *p* eine positive Probe mit demselben Etikett wie der Ankerpunkt ist, *n* eine negative Probe mit einem anderen Etikett als *a* ist, *m* eine Marge ist und *d* ein zwischen Proben gemessener Abstand ist,
wobei der Klassifikationsblock eine Global-Average-Pooling-Schicht umfasst, die die Daten von dem Decodiererabschnitt sammelt und ein Merkmal für jede entsprechende Kategorie der Klassifikationsaufgabe erzeugt und Speicherbedarf reduziert, Korrespondenz erzwingt und Überanpassung reduziert, wobei der Global-Average-Pooling-Schicht eine dichte Schicht mit 64 Filtern folgt und Relu-Aktivierung mit einem Random-Normal-Kernel und einer letzten Schicht in der Sequenz eine dichte Schicht mit einer SoftMax-Funktion für 4-Klassen-Klassifikation ist und die extrahierte Mehrzahl von Merkmalen in einen Satz von vordefinierten Merkmalsklassen klassifiziert;
Vergleichen (206), über den einen oder die mehreren Hardwareprozessoren, der extrahierten Mehrzahl von Merkmalen mit einem Satz von Herstellerspezifikationen, wobei die Herstellerspezifikationen Charakteristiken verschiedener Typen der Implantate von jedem einer Mehrzahl von Herstellern erfassen, wobei jeder Typ von Implantat von jedem Hersteller eine oder mehrere einzigartige Charakteristiken umfasst, die helfen, zwischen Implantaten von verschiedenen Herstellern zu unterscheiden und den Typ von Implantat zu identifizieren;
Identifizieren (208), über den einen oder die mehreren Hardwareprozessoren, des Typs und des Herstellers des mindestens einen Implantats, basierend auf einer Übereinstimmung, die für die extrahierte Mehrzahl von Merkmalen mit den Herstellerspezifikationen gefunden wird.

2. Prozessorimplementiertes Verfahren nach Anspruch 1, wobei ein Sobelfilter zum Erfassen einer Mehrzahl von kantenbasierten Merkmalen des mindestens einen Implantats verwendet wird, wobei die Mehrzahl von kantenbasierten Merkmalen eine oder mehrere von Kanten des mindestens einen Implantats, eine oder mehrere Schrauben, die in dem mindestens einen Implantat vorhanden sind, eine oder mehrere Kuppeln des mindestens einen Implantats und eine zugespitzte Bodenform des Implantats umfasst.

3. System (100), umfassend:
einen oder mehrere Hardwareprozessoren (102);
eine Kommunikationsschnittstelle (112); und
einen Speicher (104), der eine Mehrzahl von Anweisungen speichert, wobei die Mehrzahl von Anweisungen den einen oder die mehreren Hardwareprozessoren zu Folgendem veranlasst:
Sammeln eines Röntgenbilds eines Subjekts als Eingabe;
Extrahieren, über einen 3-Block-Klassifikator, der von dem einen oder den mehreren Hardwareprozessoren ausgeführt wird, einer Mehrzahl von Merkmalen von mindestens einem Implantat in dem Röntgenbild, wobei der 3-Block-Klassifikator die Mehrzahl von Merkmalen unter Verwendung von a) einem Codierer-Decodierer-Block, b) einem faltungsdichten Block und c) einem Klassifikationsblock extrahiert, wobei ein Codiererabschnitt des Codierer-Decodierer-Blocks eine Mehrzahl von Faltungsblöcken umfasst, die in einer Sequenz angeordnet sind, und wobei ein erster Faltungsblock in der Mehrzahl von Faltungsblöcken eine 2D-Faltungsschicht, eine leakyRelu-Schicht und eine Dropout-Schicht umfasst, und jeder nachfolgende Faltungsblock unter der Mehrzahl von Faltungsblöcken die 2D-Faltungsschicht, die leakyRelu-Schicht, die Dropout-Schicht und eine Stapelnormalisierungsschicht umfasst,
wobei ein Decodiererabschnitt des Codierer-Decodierer-Blocks eine Mehrzahl von 2D-transponierten Faltungsaufwärtsabtastungsblöcken umfasst, die in einer Sequenz angeordnet sind, und wobei jeder der Mehrzahl von 2D-transponierten Faltungsaufwärtsabtastungsblöcken eine faltende 2D-Transponierungsschicht, eine Stapelnormalisierungsschicht, eine leakyRelu-Schicht und eine Dropout-Schicht umfasst,
wobei die Stapelnormalisierung in dem Codiererabschnitt verwendet wird, um eine Aktivierungsverteilung zu stabilisieren,
wobei der faltungsdichte Block einen Faltungsblock und eine Mehrzahl von dichten Blöcken umfasst, wobei der Faltungsblock 256 Filter, eine leakyRelu-Schicht und eine Stapelnormalisierungsschicht umfasst, und jeder der Mehrzahl von dichten Blöcken eine dichte Schicht, die leakyRelu-Schicht und die Stapelnormalisierungsschicht umfasst, und wobei der Faltungsblock ein oder mehrere feinere Merkmale des mindestens einen Implantats unter Verwendung der 256 Filter und einer oder mehrerer Merkmalskarten extrahiert, und Merkmale von jedem der Mehrzahl von dichten Blöcken mit Daten von einer Aktivierungsschicht unter Verwendung eines Verkettungsblocks kombiniert werden,
wobei der 3-Block-Klassifikator eine überwachte Kontrastverlustfunktion verwendet, um ein Klassenungleichgewichtsproblem zu eliminieren, während der Typ und Hersteller des mindestens einen Implantats identifiziert werden, und wobei während der Berechnung des Verlusts eines Klassentyps die überwachte Kontrastverlustfunktion Einbettungen einer oder mehrerer anderer Klassen berücksichtigt,
wobei der Verlust berechnet wird durch: $L = max \left[d\left(a, p\right)-d\left(a, n\right)+m,0\right] ,$
wobei *a* ein Ankeretikett oder ein in Betracht gezogenes Etikett ist, *p* eine positive Probe mit demselben Etikett wie der Ankerpunkt ist, *n* eine negative Probe mit einem anderen Etikett als *a* ist, *m* eine Marge ist und *d* ein zwischen Proben gemessener Abstand ist,
wobei der Klassifikationsblock eine Global-Average-Pooling-Schicht umfasst, die die Daten von dem Decodiererabschnitt sammelt und ein Merkmal für jede entsprechende Kategorie der Klassifikationsaufgabe erzeugt und Speicherbedarf reduziert, Korrespondenz erzwingt und Überanpassung reduziert, wobei der Global-Average-Pooling-Schicht eine dichte Schicht mit 64 Filtern folgt und Relu-Aktivierung mit einem Random-Normal-Kernel und einer letzten Schicht in der Sequenz eine dichte Schicht mit einer SoftMax-Funktion für 4-Klassen-Klassifikation ist und die extrahierte Mehrzahl von Merkmalen in einen Satz von vordefinierten Merkmalsklassen klassifiziert;
Vergleichen der extrahierten Mehrzahl von Merkmalen mit einem Satz von Herstellerspezifikationen, wobei die Herstellerspezifikationen Charakteristiken verschiedener Typen der Implantate von jedem einer Mehrzahl von Herstellern erfassen, wobei jeder Typ von Implantat von jedem Hersteller eine oder mehrere einzigartige Charakteristiken umfasst, die helfen, zwischen Implantaten von verschiedenen Herstellern zu unterscheiden und den Typ von Implantat zu identifizieren; und Identifizieren des Typs und des Herstellers des mindestens einen Implantats, basierend auf einer Übereinstimmung, die für die extrahierte Mehrzahl von Merkmalen mit den Herstellerspezifikationen gefunden wird.

4. System nach Anspruch 3, wobei ein Sobelfilter zum Erfassen einer Mehrzahl von kantenbasierten Merkmalen des mindestens einen Implantats verwendet wird, wobei die Mehrzahl von kantenbasierten Merkmalen eine oder mehrere von Kanten des mindestens einen Implantats, eine oder mehrere Schrauben, die in dem mindestens einen Implantat vorhanden sind, eine oder mehrere Kuppeln des mindestens einen Implantats und eine zugespitzte Bodenform des Implantats umfasst.

## Revendications

1. Procédé mis en œuvre par processeur (200), comprenant :
la collecte (202), via un ou plusieurs processeurs matériels, d'une image radiographique d'un sujet en tant qu'entrée ;
l'extraction (204), en utilisant un classificateur à 3 blocs exécuté par les un ou plusieurs processeurs matériels, d'une pluralité de caractéristiques d'au moins un implant dans l'image radiographique, dans lequel le classificateur à 3 blocs extrait la pluralité de caractéristiques en utilisant a) un bloc codeur-décodeur, b) un bloc convolutionnel dense, et c) un bloc de classification, dans lequel une section de codeur du bloc codeur-décodeur comprend une pluralité de blocs de convolution agencés dans une séquence, et dans lequel un premier bloc de convolution dans la pluralité de blocs de convolution comprend une couche de convolution 2D, une couche Leaky ReLU, et une couche Dropout, et chaque bloc de convolution suivant parmi la pluralité de blocs de convolution comprend la couche de convolution 2D, la couche Leaky ReLU, la couche Dropout, et une couche de normalisation par lots, dans lequel une section de décodeur du bloc codeur-décodeur comprend une pluralité de blocs de sur-échantillonnage par convolution transposée 2D agencés dans une séquence, et dans lequel chacun de la pluralité de blocs de sur-échantillonnage par convolution transposée 2D comprend une couche de convolution transposée 2D, une couche de normalisation par lots, une couche Leaky ReLU, et une couche Dropout,
dans lequel la normalisation par lots est utilisée dans la section de codeur pour stabiliser une distribution d'activation,
dans lequel le bloc convolutionnel dense comprend un bloc de convolution et une pluralité de blocs denses, dans lequel le bloc de convolution comprend 256 filtres, une couche Leaky ReLU, et une couche de normalisation par lots, et chacun de la pluralité de blocs denses comprend une couche dense, la couche Leaky ReLU, et la couche de normalisation par lots, et dans lequel le bloc de convolution extrait une ou plusieurs caractéristiques plus fines de l'au moins un implant en utilisant les 256 filtres et une ou plusieurs cartes de caractéristiques, et des caractéristiques de chacun de la pluralité de blocs denses sont combinées avec des données provenant d'une couche d'activation en utilisant un bloc de concaténation,
dans lequel le classificateur à 3 blocs utilise une fonction de perte contrastive supervisée pour éliminer un problème de déséquilibre de classe tout en identifiant le type et le fabricant de l'au moins un implant, et dans lequel, tout en calculant une perte d'un type de classe, la fonction de perte contrastive supervisée considère des représentations vectorielles d'une ou plusieurs autres classes,
dans lequel la perte est calculée par : $L = max \left[d\left(a, p\right)-d\left(a, n\right)+m,0\right] ,$
dans lequel *a* est une étiquette d'ancrage ou une étiquette considérée, *p* est un échantillon positif avec la même étiquette que le point d'ancrage, *n* est un échantillon négatif avec une étiquette différente de *a*, *m* est une marge, et *d* est une distance mesurée entre des échantillons,
dans lequel le bloc de classification comprend une couche de pooling global moyen collectant les données provenant de la section de décodeur et génère une caractéristique pour chaque catégorie correspondante de la tâche de classification, et réduit une exigence de mémoire, impose une correspondance, et réduit un surajustement, dans lequel la couche de pooling global moyen est suivie d'une couche dense avec 64 filtres, et une activation de ReLU avec un noyau normal aléatoire et une couche finale dans la séquence est une couche dense avec une fonction SoftMax pour une classification à 4 classes et classifie la pluralité de caractéristiques extraites en un ensemble de classes de caractéristiques prédéfinies
la comparaison (206), via les un ou plusieurs processeurs matériels, de la pluralité de caractéristiques extraites à un ensemble de spécifications de fabricant, dans lequel les spécifications de fabricant capturent des caractéristiques de différents types des implants provenant de chacun d'une pluralité de fabricants, dans lequel chaque type d'implant provenant de chaque fabricant comprend une ou plusieurs caractéristiques uniques qui aident à différencier entre des implants provenant de différents fabricants et à identifier un type d'implant ;
l'identification (208), via les un ou plusieurs processeurs matériels, d'un type et d'un fabricant de l'au moins un implant, sur la base d'une correspondance trouvée pour la pluralité de caractéristiques extraites avec les spécifications de fabricant.

2. Procédé mis en œuvre par processeur selon la revendication 1, dans lequel un filtre de Sobel est utilisé pour capturer une pluralité de caractéristiques basées sur des bords de l'au moins un implant, dans lequel la pluralité de caractéristiques basées sur des bords comprend un ou plusieurs des bords de l'au moins un implant, une ou plusieurs vis présentes dans l'au moins un implant, un ou plusieurs dômes de l'au moins un implant, et une forme pointue de la base de l'implant.

3. Système (100), comprenant :
un ou plusieurs processeurs matériels (102) ;
une interface de communication (112) ; et
une mémoire (104) stockant une pluralité d'instructions, dans lequel la pluralité d'instructions amènent les un ou plusieurs processeurs matériels à :
collecter une image radiographique d'un sujet en tant qu'entrée ;
extraire, via un classificateur à 3 blocs exécuté par les un ou plusieurs processeurs matériels, une pluralité de caractéristiques d'au moins un implant dans l'image radiographique, dans lequel le classificateur à 3 blocs extrait la pluralité de caractéristiques en utilisant a) un bloc codeur-décodeur, b) un bloc convolutionnel dense, et c) un bloc de classification, dans lequel une section de codeur du bloc codeur-décodeur comprend une pluralité de blocs de convolution agencés dans une séquence, et dans lequel un premier bloc de convolution dans la pluralité de blocs de convolution comprend une couche de convolution 2D, une couche Leaky ReLU, et une couche Dropout, et chaque bloc de convolution suivant parmi la pluralité de blocs de convolution comprend la couche de convolution 2D, la couche Leaky ReLU, la couche Dropout, et une couche de normalisation par lots,
dans lequel une section de décodeur du bloc codeur-décodeur comprend une pluralité de blocs de sur-échantillonnage par convolution transposée 2D agencés dans une séquence, et dans lequel chacun de la pluralité de blocs de sur-échantillonnage par convolution transposée 2D comprend une couche de convolution transposée 2D, une couche de normalisation par lots, une couche Leaky ReLU, et une couche Dropout,
dans lequel la normalisation par lots est utilisée dans la section de codeur pour stabiliser une distribution d'activation,
dans lequel le bloc convolutionnel dense comprend un bloc de convolution et une pluralité de blocs denses, dans lequel le bloc de convolution comprend 256 filtres, une couche Leaky ReLU, et une couche de normalisation par lots, et chacun de la pluralité de blocs denses comprend une couche dense, la couche Leaky ReLU, et la couche de normalisation par lots, et dans lequel le bloc de convolution extrait une ou plusieurs caractéristiques plus fines de l'au moins un implant en utilisant les 256 filtres et une ou plusieurs cartes de caractéristiques, et des caractéristiques de chacun de la pluralité de blocs denses sont combinées avec des données provenant d'une couche d'activation en utilisant un bloc de concaténation,
dans lequel le classificateur à 3 blocs utilise une fonction de perte contrastive supervisée pour éliminer un problème de déséquilibre de classe tout en identifiant le type et le fabricant de l'au moins un implant, et dans lequel, tout en calculant une perte d'un type de classe, la fonction de perte contrastive supervisée considère des représentations vectorielles d'une ou plusieurs autres classes,
dans lequel la perte est calculée par : $L = max \left[d\left(a, p\right)-d\left(a, n\right)+m,0\right] ,$
dans lequel *a* est une étiquette d'ancrage ou une étiquette considérée, *p* est un échantillon positif avec la même étiquette que le point d'ancrage, *n* est un échantillon négatif avec une étiquette différente de *a, m* est une marge, et *d* est une distance mesurée entre des échantillons,
dans lequel le bloc de classification comprend une couche de pooling global moyen collectant les données provenant de la section de décodeur et génère une caractéristique pour chaque catégorie correspondante de la tâche de classification, et réduit une exigence de mémoire, impose une correspondance, et réduit un surajustement, dans lequel la couche de pooling global moyen est suivie d'une couche dense avec 64 filtres, et une activation de ReLU avec un noyau normal aléatoire et une couche finale dans la séquence est une couche dense avec une fonction SoftMax pour une classification à 4 classes et classifie la pluralité de caractéristiques extraites en un ensemble de classes de caractéristiques prédéfinies ;
la comparaison de la pluralité de caractéristiques extraites à un ensemble de spécifications de fabricant, dans lequel les spécifications de fabricant capturent des caractéristiques de différents types des implants provenant de chacun d'une pluralité de fabricants, dans lequel chaque type d'implant provenant de chaque fabricant comprend une ou plusieurs caractéristiques uniques qui aident à différencier entre des implants provenant de différents fabricants et à identifier un type d'implant ; et
l'identification d'un type et d'un fabricant de l'au moins un implant, sur la base d'une correspondance trouvée pour la pluralité de caractéristiques extraites avec les spécifications de fabricant.

4. Système selon la revendication 3, dans lequel un filtre de Sobel est utilisé pour capturer une pluralité de caractéristiques basées sur des bords de l'au moins un implant, dans lequel la pluralité de caractéristiques basées sur des bords comprend un ou plusieurs des bords de l'au moins un implant, une ou plusieurs vis présentes dans l'au moins un implant, un ou plusieurs dômes de l'au moins un implant, et une forme pointue de la base de l'implant.
